# EUROPÄISCHE PATENTANMELDUNG

(11) **EP 4 187 337 A1**
(43) Veröffentlichungstag der Anmeldung: **31.05.2023**
(21) Anmeldenummer: 22209046.6
(22) Anmeldetag: 23.11.2022
(51) Int. Cl.: G05B 19/401, G05B 19/402, B23Q 17/24

(54) **VERFAHREN ZUR ZERSPANENDEN BEARBEITUNG EINES WERKSTÜCKS**

(30) Priorität: 25.11.2021 DE 102021130917
(71) Anmelder: stoba Präzisionstechnik GmbH & Co. KG, 71522 Backnang (DE)
(72) Erfinder: Barth, Harald, 71522 Backnang (DE); Müller, Heiko, 71404 Korb (DE)
(74) Vertreter: Winter, Brandl - Partnerschaft mbB

(57) **Zusammenfassung**

Die Erfindung betrifft ein Verfahren (1) zur zerspanenden Bearbeitung eines Werkstücks (2) in einer Werkzeugmaschine, mit den folgenden Schritten: Einspannen des Werkstücks (2) in einer ersten Position (S1); Abstandsmessen zu einer unbearbeiteten Oberfläche des Werkstücks (2) (S2); Bearbeiten der unbearbeiteten Oberfläche (S3); Abstandsmessen zu der bearbeiteten Oberfläche (S4); Ermitteln eines durch die Bearbeitung der Oberfläche entstandenen Abtrags durch Vergleichen der Abstandsmessungen zu der unbearbeiteten Oberfläche und zu der bearbeiteten Oberfläche (S5); und Wählen der bearbeiteten Oberfläche als eine erste Referenzfläche für nachfolgende Bearbeitungen (S6).

## Beschreibung

Die Erfindung betrifft ein Verfahren zur zerspanenden Bearbeitung eines Werkstücks in einer Werkzeugmaschine.

Insbesondere bei der Bearbeitung von Werkstücken, die aus zwei (oder mehreren) zusammengefügten Bauteilen aufgebaut sind, kann es erforderlich sein, eine Trennebene zwischen den zusammengefügten Bauteilen als Referenzmaß/Referenzlinie/Referenzfläche des Werkstücks zu verwenden. Da sich dieses Referenzmaß jedoch unter der Oberfläche des Werkstücks befindet und somit versteckt ist, kann das Referenzmaß zur Fertigbearbeitung des Werkstücks nicht zerstörungsfrei ermittelt werden. Dieses Problem tritt insbesondere bei Werkstücken auf, die aus zwei unterschiedlichen Materialien bestehenden, beispielsweise miteinander verschweißten Bauteilen aufgebaut sind. Bei solchen Werkstücken kann es aufgrund der unterschiedlichen Materialeigenschaften, etwa bei einem unmagnetischen und einem magnetischen Bauteil, für die Fertigbearbeitung und somit Teilequalität entscheidend sein, an welcher Stelle der Übergang, etwa der magnetische Übergang, innerhalb des Werkstücks liegt, um das Werkstück hinsichtlich dieses Übergangs zu positionieren und beispielsweise zerspanend bearbeiten zu können.

Bisher wurde ein solches Referenzmaß über einen sogenannten harten Anschlag bestimmt, bei der eine Fläche des unbearbeiteten Werkstücks, d.h. eine Rohlingsfläche, als Anschlagsfläche gewählt wurde, welche bis zum letzten Fertigungsschritt nicht abgetragen werden durfte, um das Referenzmaß zu halten, was sich nachteilig auf die Effizienz beim letzten Fertigungsschritt auswirkt. Zudem können Rohlingsabweichungen nicht absorbiert werden, so dass sich Maßschwankungen ergeben. Ferner kann die Prozesssicherheit für das Funktionsmaß einer versteckten Referenzfläche aufgrund der Rohlingsschwankung, eines unbekannten Beladefehlers und eines unbekannten Abtrags nicht gewährleistet werden, so dass die Toleranz der versteckten Referenzfläche nicht genauer als 0,85 ± 0,2mm sein kann.

Es ist also die Aufgabe der Erfindung, die Nachteile aus dem Stand der Technik zu vermeiden oder wenigstens zu verringern. Insbesondere soll ein Verfahren bereitgestellt werden, mit dem die Lage einer theoretisch unbekannten Referenzlinie im Werkstück über alle nachfolgenden Fertigungsschritte technisch abgesichert werden kann. Dabei soll das Referenzmaß über mehrere Fertigungsschritte, bei denen das Werkstück unterschiedlich gespannt ist, prozesssicher hergestellt werden können, wobei gleichzeitig bei jedem Fertigungsschritt optimale Zerspanungsbedingungen für das Abtragsvolumen vorliegen sollen.

Die Aufgabe der Erfindung wird durch eine Verfahren mit den Merkmalen des Patentanspruchs 1 gelöst. Vorteilhafte Weiterbildungen sind Gegenstand der Unteransprüche.

Insbesondere wird die Aufgabe der Erfindung durch ein Verfahren zur zerspanenden Bearbeitung eines Werkstücks in einer Werkzeugmaschine gelöst, wobei das Verfahren die folgenden Schritte aufweist:
- Einspannen des Werkstücks in einer ersten Position, wobei das Werkstück in der ersten Position vorzugsweise an einer (ersten) Umfangsfläche gespannt wird und/oder an einer (ersten) Axialanschlagsfläche anliegt;
- Abstandsmessen zu einer unbearbeiteten (ersten) Oberfläche, insbesondere zu einer Rohlingsfläche, vorzugsweise einer axialen Rohlingsfläche, des Werkstücks;
- Bearbeiten der unbearbeiteten (ersten) Oberfläche des Werkstücks;
- Abstandsmessen zu der bearbeiteten (ersten) Oberfläche des Werkstücks;
- Ermitteln eines durch die Bearbeitung der (ersten) Oberfläche entstandenen Abtrags durch Vergleichen der Abstandsmessungen zu der unbearbeiteten (ersten) Oberfläche und zu der bearbeiteten (ersten) Oberfläche; und
- Wählen der bearbeiteten (ersten) Oberfläche als eine erste Referenzfläche für nachfolgende Bearbeitungen.

Das heißt, dass die (erste) Oberfläche des eingespannten Werkstücks vor und nach ihrer Bearbeitung abgetastet wird, um daraus die Größe des Abtrags an der Oberfläche ermitteln zu können. Im Gegensatz zu bekannten Bearbeitungsverfahren mittels einer Werkzeugmaschine, bei denen die Größe des Abtrags lediglich anhand einer theoretischen Sollposition von zu bearbeitenden Oberflächen und der Absolutposition eines verwendeten Werkzeugs innerhalb der Werkzeugmaschine ermittelt wird, kann mit dem erfindungsgemäßen Verfahren die tatsächliche Größe des Abtrags ermittelt werden. Insbesondere, wenn sich die theoretische Sollposition der zu bearbeitenden Oberflächen (etwa aufgrund von Toleranzen, Rohlingsschwankungen, Werkzeugschwankungen, Ungenauigkeiten bei der Werkstückspannung oder der Werkzeugspannung, etc.) von der tatsächlichen Position der zu bearbeitenden Oberflächen unterscheidet, kann ein Fehler bei der Ermittlung der Abtragsgröße erheblich reduziert werden, was sich wiederum vorteilhaft auf die Bearbeitungsgenauigkeit und die Toleranzen insgesamt auswirkt. Dadurch, dass ebenjene (erste) Oberfläche als Referenz für nachfolgende Bearbeitungen gewählt wird, wirkt sich die Kalibrierung an der (ersten) Oberfläche ebenfalls vorteilhaft auf die Maßhaltigkeit der nachfolgenden Bearbeitungen aus. Somit kann auch ein Blindmaß über einen Bearbeitungsprozess durchgängig eingehalten werden.

Mit anderen Worten wird bei dem erfindungsgemäßen Verfahren sichergestellt, dass die Werkzeugmaschine die Relativposition zwischen einem für die Bearbeitung eingesetzten Werkzeug und der ersten Referenzfläche "kennt". Entscheidend ist dabei, dass die Relativposition unabhängig von Rohlingsabweichungen oder dergleichen durch den ermittelten Abtrag präzise bestimmt werden kann. Darauf basierend kann jede nachfolgende Bearbeitung in Bezug auf die erste Referenzfläche und somit in Kenntnis der Relativposition zu dem Werkzeug exakt ausgeführt werden.

Gemäß einer bevorzugten Ausführungsform kann das Werkstück aus zumindest zwei zusammengefügten Bauteilen zusammengesetzt sein. Vorzugsweise können die beiden Bauteile aus unterschiedlichen Materialen aufgebaut sein. Das heißt, dass das erfindungsgemäße Verfahren insbesondere dann von Bedeutung ist, wenn der Rohling bereits aus mehreren Bauteilen aufgebaut ist, so dass sich Rohlingsschwankungen bereits durch die Schwankungen der einzelnen Bauteile sowie durch den Vorgang des Zusammenfügens der einzelnen Bauteile ergeben können.

Gemäß einer Weiterbildung der bevorzugten Ausführungsform kann die unbearbeitete (erste) Oberfläche eine Fläche des Werkstücks sein, an der die beiden Bauteile zusammengefügt sind. Dadurch kann gewährleistet werden, dass die Fügefläche zwischen den beiden Bauteilen als Referenz für die Bearbeitung aller weiterer Flächen dient, so dass die Maße bezogen auf die Fügefläche eingehalten werden können. Da die Fügefläche oftmals innerhalb des zusammengefügten Werkstücks liegt und ihrer Position von besonders hoher Bedeutung ist, können auch geringere Toleranzen diesbezüglich eingehalten werden.

Gemäß einer bevorzugten Ausführungsform kann das Verfahren die folgenden Schritte aufweisen:
- Vergleichen, ob der ermittelte Abtrag innerhalb eines vorgegebenen Toleranzbereichs liegt; und
- Korrektur einer Werkzeugmaschineneinstellung, wenn der ermittelte Abtrag außerhalb des Toleranzbereichs liegt; und
- Weiterbearbeiten der bearbeiteten (ersten) Oberfläche, Abstandsmessen zu der weiterbearbeiteten (ersten) Oberfläche, Ermitteln eines durch die Bearbeitung und die Weiterbearbeitung an der (ersten) Oberfläche entstandenen Abtrags sowie Wählen der weiterbearbeiteten (ersten) Oberfläche als die erste Referenzfläche.

Das heißt, dass überprüft wird, ob der über das mehrmalige Abstandsmessen/über die Kalibrierung ermittelte Abtrag mit einem theoretischen, d.h. über einen Maschinenbefehl der Werkzeugmaschine/die Werkzeugmaschineneinstellung festgelegten Abtrag/einem Sollabtrag übereinstimmt bzw. innerhalb des vorgegebenen Toleranzbereichs liegt. Wenn dies nicht der Fall ist und insbesondere der tatsächliche Abtrag geringer ist als der Sollabtrag, wird die Oberfläche um das Abtragsdelta entsprechend weiterbearbeitet. Somit bietet sich in vorteilhafter Weise eine Korrekturmöglichkeit der Werkzeugmaschineneinstellung. Vorzugsweise kann die Bearbeitung der (ersten) Oberfläche sukzessiv/in mehreren Teilbearbeitungsschritten erfolgen, um zu vermeiden, dass ein finales Maß überschritten wird. Zudem erfolgt eine Fertigbearbeitung der Oberfläche vorzugsweise auf das finale Maß, so dass keine späteren Bearbeitungsschritte an der dann als erste Referenzfläche gewählten Oberfläche erforderlich sind.

Gemäß einer bevorzugten Ausführungsform kann das Verfahren den folgenden Schritt aufweisen:
- Bearbeiten von zumindest einer Oberfläche, insbesondere von einer (zweiten) Umfangsfläche und/oder einer (zweiten) Axialanschlagsfläche, in Bezug auf die erste Referenzfläche bei Spannung des Werkstücks in der ersten Position.

Das heißt, dass eine Bearbeitung der zumindest einen Oberfläche in Referenz zu der bereits kalibrierten Oberfläche erfolgt, so dass auch geringe Toleranzen eingehalten werden können.

Gemäß einer bevorzugten Ausführungsform kann das Verfahren den folgenden Schritt aufweisen:
- Umspannen des Werkstücks aus der ersten Position in eine zweite Position, in der das Werkstück an der zumindest einen Oberfläche gespannt ist, insbesondere an der (zweiten) Umfangsfläche gespannt wird und/oder an der (zweiten) Axialanschlagsfläche anliegt.

Das heißt, dass das Werkstück vorzugsweise auf die bereits (fertig)bearbeitete Oberfläche(n) umgespannt wird. Dies hat den Vorteil, dass der Zerspanungsprozess besonders effizient durchgeführt werden kann.

Gemäß einer Weiterbildung der bevorzugten Ausführungsform kann das Verfahren den folgenden Schritt aufweisen:
- Bearbeiten von zumindest einer Oberfläche, an der das Werkstück in der ersten Position gespannt wurde, insbesondere der (ersten) Umfangsfläche und/oder der (ersten) Axialanschlagsfläche, in Bezug auf die erste Referenzfläche bei Spannung des Werkstücks in der zweiten Position.

Somit können mit dem erfindungsgemäßen Verfahren alle Oberflächen des Werkstücks, also auch die zur Spannung des Werkstücks verwendeten Oberflächen, hochpräzise bearbeitet werden.

Gemäß der Weiterbildung der bevorzugten Ausführungsform können die Schritte des Abstandsmessens zu einer Oberfläche des Werkstücks; Bearbeitens der Oberfläche des Werkstücks; Abstandsmessens zu der bearbeiteten Oberfläche des Werkstücks; und Ermittelns eines durch die Bearbeitung der Oberfläche entstandenen Abtrags nach einem, vorzugsweise jedem, Werkzeugwechsel durchgeführt werden.

Mit anderen Worten wird die Abtragsmessung/Kalibrierung der Relativposition zwischen Werkstück und Werkzeug nach vorzugsweise jedem Werkzeugwechsel durchgeführt, um bei dem Werkzeugwechsel potentiell entstehende Fehler ausgleichen zu können.

Gemäß einer bevorzugten Ausführungsform können die Schritte des Abstandsmessens zu einer Oberfläche des Werkstücks; Bearbeitens der Oberfläche des Werkstücks; Abstandsmessens zu der bearbeiteten Oberfläche des Werkstücks; und Ermittelns eines durch die Bearbeitung der Oberfläche entstandenen Abtrags nach einem, vorzugsweise jedem, Wechsel einer Spannposition des Werkstücks durchgeführt werden.

Mit anderen Worten wird die Abtragsmessung/Kalibrierung der Relativposition zwischen Werkstück und Werkzeug nach vorzugsweise jeder Umspannung des Werkstücks durchgeführt, um bei der Umspannung potentiell entstehende Fehler ausgleichen zu können.

Gemäß einer bevorzugten Ausführungsform kann das Verfahren den folgenden Schritt aufweisen:
- Fertigbearbeitung von Oberflächen des Werkstücks.

Die Erfindung wird nachfolgend anhand von Figuren erläutert. Es zeigen:
Fig. 1 eine schematische Darstellung eines erfindungsgemäßen Verfahrens,
Fign. 2 bis 4 Längsschnittdarstellungen des Werkstücks in unterschiedlichen Bearbeitungsstadien.
Fig. 5 eine Längsschnittdarstellung des Werkstücks in unterschiedlichen Bearbeitungsstadien.

Die Figuren sind schematischer Natur und dienen lediglich dem Verständnis der Erfindung. Gleiche Merkmale sind mit denselben Bezugszeichen gekennzeichnet.

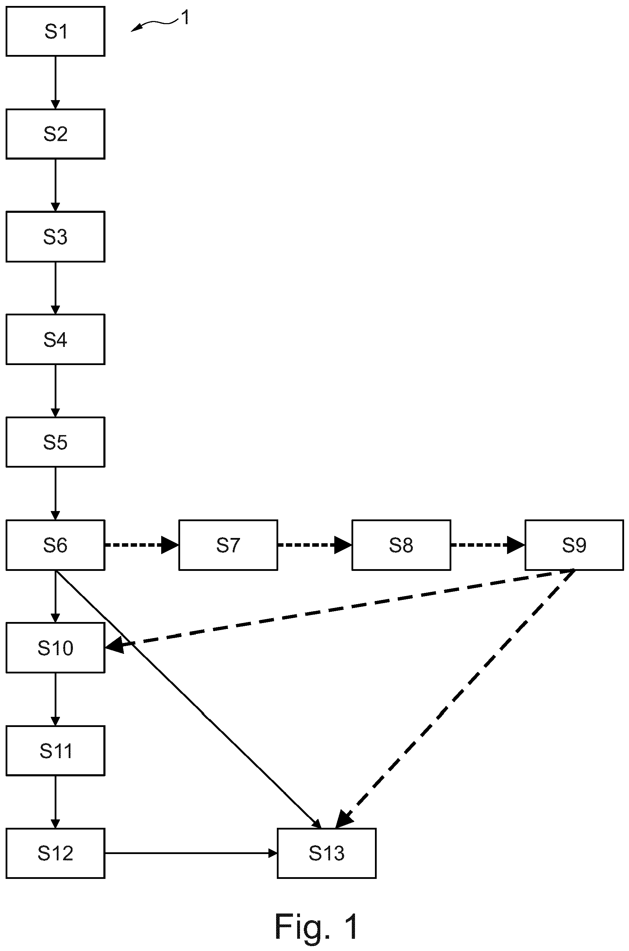

Fig. 1 zeigt ein erfindungsgemäßes Verfahren 1 zur zerspanenden Bearbeitung eines Werkstücks 2 in einer Werkzeugmaschine. In einem ersten Schritt S1 des Verfahrens 1 wird das Werkstück 2 in einer ersten Position (ein)gespannt. In einem zweiten Schritt S2 des Verfahrens 1 wird der Abstand (von einem vorbestimmten Punkt aus) zu einer unbearbeiteten Oberfläche des Werkstücks 2 gemessen. In einem dritten Schritt S3 des Verfahrens 1 wird die unbearbeitete Oberfläche des Werkstücks 2 bearbeitet. In einem vierten Schritt S4 des Verfahrens 1 wird der Abstand (von dem vorbestimmten Punkt aus) zu der bearbeiteten Oberfläche des Werkstücks 2 gemessen. In einem fünften Schritt S5 des Verfahrens 1 wird ein durch die Bearbeitung der Oberfläche entstandener Abtrag ermittelt, indem der gemessene Abstand zu der unbearbeiteten Oberfläche mit dem gemessenen Abstand zu der bearbeiteten Oberfläche verglichen wird. In einem sechsten Schritt S6 des Verfahrens 1 wird die bearbeitete Oberfläche als eine erste Referenzfläche für nachfolgende Bearbeitungen gewählt.

Insbesondere kann das Werkstück 2 aus zumindest zwei zusammengefügten Bauteilen zusammengesetzt sein. Vorzugsweise kann die unbearbeitete Oberfläche dabei eine Fläche des Werkstücks 2 sein, an der die beiden Bauteile zusammengefügt sind.

Vorzugsweise können der Schritt S2 des Abstandsmessens zu einer Oberfläche des Werkstücks 2, der Schritt S3 des Bearbeitens der Oberfläche des Werkstücks 2, der Schritt S4 des Abstandsmessens zu der bearbeiteten Oberfläche des Werkstücks 2 und der Schritt S5 des Ermittelns eines durch die Bearbeitung der Oberfläche entstandenen Abtrags nach einem Werkzeugwechsel, insbesondere nach jedem Werkzeugwechsel, durchgeführt werden.

Vorzugsweise können der Schritt S2 des Abstandsmessens zu einer Oberfläche des Werkstücks 2, der Schritt S3 des Bearbeitens der Oberfläche des Werkstücks 2, der Schritt S4 des Abstandsmessens zu der bearbeiteten Oberfläche des Werkstücks 2 und der Schritt S5 des Ermittelns eines durch die Bearbeitung der Oberfläche entstandenen Abtrags nach einem Wechsel einer Spannposition des Werkstücks 2, insbesondere nach jedem Wechsel der Spannposition des Werkstücks 2, durchgeführt werden.

Zudem kann in einem siebten Schritt S7 des Verfahrens 1 verglichen werden, ob der ermittelte Abtrag innerhalb eines vorgegebenen Toleranzbereichs liegt. In einem achten Schritt S8 des Verfahrens 1 kann eine Werkzeugmaschineneinstellung korrigiert werden, wenn der ermittelte Abtrag außerhalb des Toleranzbereichs liegt. In einem neunten Schritt S9 kann die bearbeitete Oberfläche weiterbearbeitet werden, der Abstand (von dem vorbestimmten Punkt aus) zu der weiterbearbeiteten Oberfläche gemessen, ein an der Oberfläche entstandener Abtrag ermittelt werden sowie die weiterbearbeitete Oberfläche als die erste Referenzfläche gewählt werden.

Weiter kann in einem dem sechsten Schritt S6 bzw. dem neunten Schritt S9 nachgelagerten, zehnten Schritt S10 zumindest eine Oberfläche in Bezug auf die erste Referenzfläche bei Spannung des Werkstücks 2 in der ersten Position bearbeitet werden.

Ferner kann in einem dem zehnten Schritt S10 nachgelagerten elften Schritt S11 das Werkstück 2 aus der ersten Position in eine zweite Position, in der das Werkstück 2 an der zumindest einen Oberfläche gespannt ist, umgespannt werden.

Zudem kann in einem dem elften Schritt S11 nachgelagerten zwölften Schritt S12 zumindest eine Oberfläche, an der das Werkstück 2 in der ersten Position gespannt wurde, in Bezug auf die erste Referenzfläche bei Spannung des Werkstücks 2 in der zweiten Position bearbeitet werden.

Weiterhin können in einem dem sechsten Schritt S6 bzw. dem neunten Schritt S9 oder dem zwölften Schritt S12 nachgelagerten dreizehntem Schritt S13 alle Oberflächen des Werkstücks 2 (fertig)bearbeitet werden.

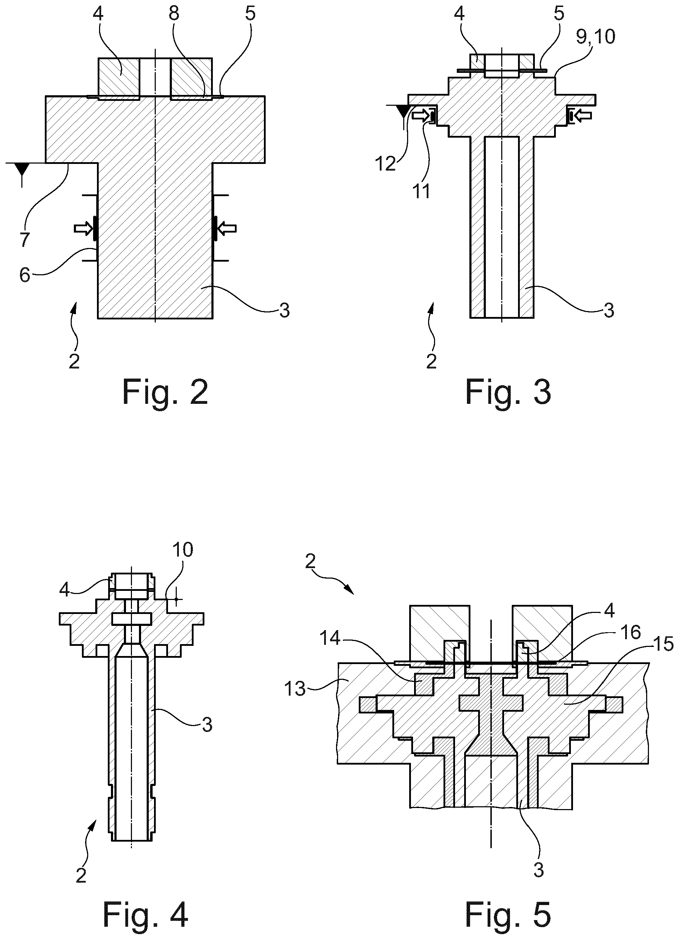

Das erfindungsgemäße Verfahren 1 wird mit Bezugnahme auf Fign. 2 bis 7 an einem konkreten Ausführungsbeispiel erläutert.

Fig. 2 zeigt das Werkstück 2 in einem Rohlingszustand. Das Werkstück 2 ist aus einem ersten Bauteil 3 und einem zweiten Bauteil 4 zusammengesetzt, die an einer Fügefläche 5 zusammengefügt, vorzugsweise verschweißt, sind. Beispielsweise können das erste Bauteil 3 und das zweite Bauteil 4 aus unterschiedlichen Materialien aufgebaut sein. Insbesondere kann das erste Bauteil 3 unmagnetisch und das zweite Bauteil 4 magnetisch sein.

Das Werkstück 2 ist in der ersten Position gespannt, in der das Werkstück 2 über eine erste Umfangsfläche 6 radial gespannt ist und über eine erste Axialanschlagsfläche 7 axial positioniert ist. Über einen Sensor, wie einen Taster, wird der Abstand zu der Fügefläche 5 gemessen, bevor die Fügefläche 5 bearbeitet wird. Das heißt, dass die Fügefläche 5 als die unbearbeitete Oberfläche dient. Aufgrund einer Materialeindringtiefe im Schweißprozess beim Fügen der beiden Bauteile 3, 4 kann die Fügefläche 5 geringfügig von einer tatsächlichen Materialtrennebene 8 der beiden Bauteile 3, 4 abweichen.

Fig. 3 zeigt das Werkstück 2 in einem Vordrehteilzustand. Die unbearbeitete Fügefläche 5 ist bearbeitet. Danach wird über den Sensor der Abstand zu der bearbeiteten Fügefläche 9 gemessen und daraus der durch die Bearbeitung entstandene Abtrag ermittelt. Die bearbeitete Fügefläche 9 wird als die erste Referenzfläche 10 für nachfolgende Bearbeitungen gewählt. In Bezug auf diese erste Referenzfläche 10 wird eine zweite Umfangsfläche 11 und eine zweite Axialanschlagsfläche 12 bearbeitet. Das Werkstück 2 wird aus der ersten Position ausgespannt und in der zweite Position gespannt, in der das Werkstück 2 über die zweite Umfangsfläche 11 radial gespannt ist und über die zweite Axialanschlagsfläche 12 axial positioniert ist.

In der zweiten Position werden die noch nicht fertigbearbeitete Oberflächen des Werkstücks 2 bearbeitet. Insbesondere wird auch die erste Umfangsfläche 6 und die erste Axialanschlagsfläche 7, die zuvor zur Spannung in der ersten Position dienten, in der zweiten Position fertigbearbeitet. Dabei dient die erste Referenzfläche 10 als Bezugspunkt für die Bearbeitungen. Fig. 4 zeigt das Werkstück als Fertigteil.

Fig. 5 zeigt die unterschiedlichen Bearbeitungsstadien des Werkstücks 2 im Detail. Der Rohlingszustand ist mit einer ersten Schraffur 13 dargestellt. Der Vordrehteilzustand ist mit einer zweiten Schraffur 14 dargestellt. Der Fertigteilzustand ist mit einer dritten Schraffur 15 dargestellt. Mit dem erfindungsgemäßen Verfahren konnte das Blindmaß durchgängig in der Prozesskette bestimmt werden. Somit wird ein magnetischer Übergang, der im Bereich einer Fügeverbindung 16 liegt, sichergestellt.

## Patentansprüche

1. Verfahren (1) zur zerspanenden Bearbeitung eines Werkstücks (2) in einer Werkzeugmaschine, mit den folgenden Schritten:
- Einspannen des Werkstücks (2) in einer ersten Position (S1);
- Abstandsmessen zu einer unbearbeiteten Oberfläche, insbesondere zu einer Rohlingsfläche, des Werkstücks (2) (S2);
- Bearbeiten der unbearbeiteten Oberfläche (S3);
- Abstandsmessen zu der bearbeiteten Oberfläche (S4);
- Ermitteln eines durch die Bearbeitung der Oberfläche entstandenen Abtrags durch Vergleichen der Abstandsmessungen zu der unbearbeiteten Oberfläche und zu der bearbeiteten Oberfläche (S5); und
- Wählen der bearbeiteten Oberfläche als eine erste Referenzfläche für nachfolgende Bearbeitungen (S6).

2. Verfahren (1) nach Anspruch 1, **dadurch gekennzeichnet, dass** das Werkstück (2) aus zumindest zwei zusammengefügten Bauteilen (3, 4) zusammengesetzt ist.

3. Verfahren (1) nach Anspruch 2, **dadurch gekennzeichnet, dass** die unbearbeitete Oberfläche eine Fläche (5) des Werkstücks (2) ist, an der die beiden Bauteile (3, 4) zusammengefügt sind.

4. Verfahren (1) nach einem der Ansprüche 1 bis 3, **gekennzeichnet durch** die folgenden Schritte:
- Vergleichen, ob der ermittelte Abtrag innerhalb eines vorgegebenen Toleranzbereichs liegt (S7); und
- Korrektur einer Werkzeugmaschineneinstellung, wenn der ermittelte Abtrag außerhalb des Toleranzbereichs liegt (S8); und
- Weiterbearbeiten der bearbeiteten Oberfläche, Abstandsmessen zu der weiterbearbeiteten Oberfläche, Ermitteln eines an der Oberfläche entstandenen Abtrags sowie Wählen der weiterbearbeiteten Oberfläche als die erste Referenzfläche (S9).

5. Verfahren (1) nach einem der Ansprüche 1 bis 4, **gekennzeichnet durch** den folgenden Schritt:
- Bearbeiten von zumindest einer Oberfläche in Bezug auf die erste Referenzfläche bei Spannung des Werkstücks (2) in der ersten Position (S10).

6. Verfahren (1) nach Anspruch 5, **gekennzeichnet durch** den folgenden Schritt:
- Umspannen des Werkstücks (2) aus der ersten Position in eine zweite Position, in der das Werkstück (2) an der zumindest einen Oberfläche gespannt ist (S11).

7. Verfahren (1) Anspruch 6, **gekennzeichnet durch** den folgenden Schritt:
- Bearbeiten von zumindest einer Oberfläche, an der das Werkstück (2) in der ersten Position gespannt wurde, in Bezug auf die erste Referenzfläche bei Spannung des Werkstücks (2) in der zweiten Position (S12).

8. Verfahren (1) nach einem der Ansprüche 1 bis 7, **dadurch gekennzeichnet, dass** die Schritte des Abstandsmessens zu einer Oberfläche des Werkstücks (2) (S2); Bearbeitens der Oberfläche (S3); Abstandsmessens zu der bearbeiteten Oberfläche (S4); und Ermittelns eines durch die Bearbeitung der Oberfläche entstandenen Abtrags (S5) nach einem, vorzugsweise jedem, Werkzeugwechsel durchgeführt werden.

9. Verfahren (1) nach einem der Ansprüche 1 bis 8, **dadurch gekennzeichnet, dass** die Schritte des Abstandsmessens zu einer Oberfläche des Werkstücks (2) (S2); Bearbeitens der Oberfläche (S3); Abstandsmessens zu der bearbeiteten Oberfläche (S4); und Ermittelns eines durch die Bearbeitung der Oberfläche entstandenen Abtrags (S5) nach einem, vorzugsweise jedem, Wechsel einer Spannposition des Werkstücks (2) durchgeführt werden.

10. Verfahren (1) nach einem der Ansprüche 1 bis 9, **gekennzeichnet durch** den folgenden Schritt:
- Fertigbearbeitung von Oberflächen des Werkstücks (2) (S13).
